# DEMANDE DE BREVET EUROPEEN

(11) **EP 2 912 955 A1**
(43) Date de publication de la demande: **02.09.2015**
(21) Numéro de dépôt: 15156658.5
(22) Date de dépôt: 26.02.2015
(51) Int. Cl.: A23L 1/30, A23L 1/32, A23K 1/16, A23K 1/18

(54) **Oeuf présentant une composition lipidique équilibrée**

(30) Priorité: 28.02.2014 BE 201400140
(71) Demandeur: BNLfood Investments SARL, 9559 Wiltz (LU)
(72) Inventeur: Thiry, Jean-François, 6600 Bastogne (BE); Philippin, Laurent, 6800 Libramont (BE)
(74) Mandataire: Gevers Patents

(57) **Abrégé**

Oeuf caractérisé en ce qu'il présente des acides gras ω6 et ω3 en position sn-2 d'une fraction triglycéride équilibrée selon un rapport acides gras ω6 / acide gras ω3 compris entre 1 : 1 ± 10% et 1 : 1,2 ± 10%.

## Description

La présente invention se rapporte à un oeuf présentant un effet hypocholestérolaémique amélioré provenant d'un oiseau domestiqué, en particulier d'une pondeuse, présentant :
- une fraction lipidique équilibrée en acides gras ω6 et ω3 de types plantes à graines et plantes vertes selon un rapport acides gras ω6 de type plantes à graines / acide gras ω3 de type plante verte = 1 :1 ± 10% ;
- une fraction lipidique équilibrée entre les acides gras polyinsaturés et les acides gras saturés selon un rapport acides gras polyinsaturés / acides gras saturés = 1 :1 ± 10%.

Un tel oeuf est connu du document EP1282367 qui vise à procurer un oeuf présentant un profil lipidique équilibré afin d'obtenir un produit compatible avec un menu sain pour l'être humain et pour les animaux comparable à celui prévu par la nature.

L'oeuf selon l'invention vise une action hypocholestérolaémique améliorée par rapport aux oeufs connus de l'état de la technique.

Par les termes « action hypocholestérolaémique améliorée » on entend dans la présente invention une action qui est associée à une diminution significative du cholestérol sérique chez l'individu qui absorbe cet oeuf.

Pour atteindre cet objectif, la présente invention est caractérisée en ce que des acides gras ω6 et ω3 en position sn-2 d'une fraction triglycéride équilibrée sont présents dans un rapport acides gras ω6 / acide gras ω3 compris entre 1 : 1 ± 10% et 1 : 1,2 ± 10%.

Dans le cadre de la présente invention, il a été observé qu'à ce rapport acides gras ω6 / acide gras ω3 en position sn-2 d'une fraction triglycéride compris entre 1 : 1 ± 10% et 1 : 1,2 ± 10%, correspond une fraction en acide gras ω3 en position sn-2 de la fraction triglycéride significativement augmentée, au regard de l'oeuf divulgué dans l'état de la technique, et en particulier au regard de l'oeuf standard, sans toutefois modifier le profil lipidique équilibré de l'oeuf.

Par les termes « fraction significativement augmentée », on entend au sens de la présente invention une fraction en acides gras 3 en position sn-2 de la fraction triglycéride correspondant à au moins 1% en poids par rapport au poids total en acides gras, de préférence entre 2% et 4% en poids par rapport au poids total en acides gras.

Cette composition particulière de l'oeuf selon l'invention est obtenue par une alimentation particulière imposée à l'oiseau, essentiellement riche en acide α-linolénique (acide gras ω3).

Aussi, en incorporant une composition alimentaire spécifique à base d 'acide α-linolénique à la nourriture des oiseaux, et/ou en choisissant un cheptel défini de races et/ou d'espèces d'oiseaux, ledit cheptel étant en outre alimenté selon un procédé spécifique sur base d'une composition alimentaire ciblée, des oeufs présentant une fraction augmentée en acide gras ω3 en position sn-2 de la fraction triglycéride tout en préservant une composition lipidique équilibrée ont été obtenus.

Dans ce contexte, l'obtention d'un oeuf présentant un effet hypocholestérolaémique amélioré ne pouvait pas être anticipée de l'état de la technique puisque, d'une part, le document EP1282367 enseigne que la majorité des acides gras ω3 absorbés par l'oiseau ont vocation à être liés en position sn-1/3 sur les triglycérides de l'oeuf, les acides gras essentiels étant presque tous présents à la position sn-2 sur les triglycérides, et, d'autre part, la variabilité des processus naturels relatifs au métabolisme de l'oiseau, pour un profil racial spécifique du cheptel, conjointement à un procédé d'alimentation défini sur base d'une composition alimentaire ciblée, ne permettait en aucun cas de pouvoir anticiper que, sur base d'une alimentation spécifique, un oeuf présentant un profil amélioré en acide gras ω3 lié aux triglycérides à la position sn-2 pouvait être produit par voie naturelle.

Ainsi, de par la présence d'une fraction significativement accrue en acide gras ω3 lié en position sn-2, l'oeuf selon l'invention permet un effet hypocholestérolaémique accru et permet donc d'abaisser significativement le cholestérol chez l'être humain qui le consomme.

Alternativement, l'oeuf selon l'invention présentant une fraction phospholipidique équilibrée selon le rapport acides gras ω6 dérivés d'animaux / acides gras ω3 dérivés d'animaux = 1 :3 ± 10%.

Avantageusement, l'oeuf selon l'invention est équilibré en acides gras ω3 de type plantes vertes et dérivés d'animaux selon un rapport acides gras ω3 de type plantes vertes / acides gras ω3 d'animaux = 5 :1 ± 10%.Eventuellement, l'oeuf selon l'invention comprend des acides gras ω3 de type plantes vertes en concentration comprise entre 450 et 600 mg/oeuf.

En particulier, l'oeuf selon l'invention présente des acides gras ω3 dérivés d'animaux constituent plus de 90 mg/oeuf et dont la composition comprend des acides gras ω3 en C20 et C22, les acides gras en C20 et en C22 étant de préférence choisis dans le groupe constitué de l'acide eicosapentaénoïque, de l'acide docosapenténoïque et de l'acide docosa-hexaénoïque.

De préférence, l'oeuf selon l'invention ne contient pas plus de 400 mg/oeuf d'acides gras ω6 dérivés d'animaux et qui est essentiellement l'acide arachidonique.

Dans un mode particulier de réalisation, l'oeuf selon l'invention ne contient pas plus de 2,5 g d'acides gras saturés et 375 mg de cholestérol par % en poids de partie comestible.

D'autres formes de réalisation de l'oeuf suivant l'invention sont indiquées dans les revendications annexées.

La présente invention porte aussi sur une composition alimentaire comprenant, comme ingrédient alimentaire, l'ensemble de l'oeuf ou le jaune de l'oeuf selon l'invention, en particulier une composition alimentaire convenant à la consommation humaine.

D'autres formes de réalisation de la composition suivant l'invention sont indiquées dans les revendications annexées.

En outre, d'autres caractéristiques, détails et avantages de l'invention ressortiront de la description donnée ci-après, à titre non limitatif.

### Exemple 1

Le profil lipidique (Tableaux 1a et 1b) d'un jaune d'oeuf selon l'invention est comparé à celui (Tableaux 2a et 2b) issu d'un jaune d'oeuf standard. Les profils sont décrits ci-dessous :

**Tableaux 1a et 1b : Profil lipidique d'un jaune d'oeuf standard**

| 1a | TG | | | | TL |
|---|---|---|---|---|---|
| | sn-1/3 % tot FA | sn-2 % tot FA | sn-1/3 rel % FA | sn-2 rel % FA | % FA |
| c14:0 | 0,18 | 0,18 | 46,70% | 46,44% | 0,39 +/- 0,05 |
| c14:1 n5 | 0,00 | 0,00 | 0,00% | 0,00% | 0,00 +/- 0,01 |
| c15:0 | 0,00 | 0,00 | 0,00% | 0,00% | 0,00 +/- 0,01 |
| c16:0 | 15,21 | 2.67 | 62,60% | 11,01% | 24,29 +/-1,70 |
| c16:1 | 2,04 | 1,05 | 60,69% | 31,32% | 3,37 +/- 0,37 |
| c17:0 | 0,00 | 0,00 | 0,00% | 0,00% | 0,00 +/- 0,01 |
| c17:1 | 0,00 | 0,00 | 0,00% | 0,00% | 0,00 +/- 0,01 |
| c18:0 | 3,03 | 1,08 | 37,16% | 13,26% | 8,14 +/- 0,67 |
| c18:1 | 24,21 | 14,99 | 53,94% | 33,41% | 44,87 +/-1,22 |
| c18:2 n6 | 6,57 | 5,12 | 43,22% | 33,67% | 15,20 +/-1,55 |
| c18:3 n3 | 0,21 | 0,15 | 52,37% | 39,06% | 0,40 +/-1,34 |
| c18:4 n3 | 0,00 | 0,00 | 0,00% | 0,00% | 0,00 +/- 0,01 |
| c20:1 n9 | 0,18 | 0,05 | 65,79% | 18,69% | 0,28 +/- 0,05 |
| c20:2 n6 | 0,00 | 0,00 | 0,00% | 0.00% | 0,00 +/- 0,01 |
| c20:4 n6 | 0,18 | 0,08 | 10,32% | 4,40% | 1,75 +/-0,12 |
| c20:3 n3 | 0,00 | 0,00 | 0,00% | 0,00% | 0,00 +/-0,01 |
| c20:5 n3 | 0,00 | 0,03 | 0,00% | 91,44% | 0,03 +/-0,05 |
| c22:4 n6 | 0,05 | 0,03 | 28,92% | 14,38% | 0,18 +/- 0,01 |
| c22:5 n6 | 0,05 | 0,03 | 11,76% | 5,85% | 0,44 +/- 0,01 |
| c22:5 n3 | 0,03 | 0,03 | 25,89% | 25,75% | 0,10 +/- 0,04 |
| c22:6 n3 | 0,05 | 0,00 | 8,86% | 0,00% | 0,58 +/- 0,17 |
| **SOMME** | **51,98** | **25,48** | | | |
| | | | | | |
| SAFA | 18,41 | 3,93 | 56,10% | 11,99% | 32,82 +/-1,20 |
| MUFA | 26,43 | 16,10 | 54,48% | 33,18% | 48,52 +/-2,1 |
| PUFA | 7,14 | 5,45 | 38,21% | 29,19% | 18,68 +/- 1,7 |
| LC-PUFA | 0,36 | 0,18 | 11,74% | 5,84% | 3,08 +/- 0,1 |
| w6 | 6,85 | 5,25 | 39,00% | 29,85% | 17.57 +/-1,10 |
| w3 | 0,28 | 0,21 | 25,70% | 18,58% | 1,11 +/-1,08 |
| P/S | 0,39 | 1,39 | | | 0,57 +/- 0,10 |
| w6:w3 | 24,09 | 25,50 | | | 15,87 +/- 0,06 |
| w6:w3 LCP | 3,67 | 2,50 | | | 3,33 +/- 0,01 |

| 1b | PL | | | | TL |
|---|---|---|---|---|---|
| | sn-1 % tot FA | sn-2 % tot FA | sn-1 rel % FA | sn-2 rel % FA | % FA |
| c14:0 | 0,03 | 0,000 | 6,87% | 0,00% | 0,39 +/- 0,05 |
| c14:1 n5 | 0,00 | 0,000 | 0,00% | 0,00% | 0,00 +/- 0,01 |
| c15:0 | 0,00 | 0,000 | 0,00% | 0,00% | 0,00 +/- 0,01 |
| c16:0 | 6,25 | 0,159 | 25,73% | 0,65% | 24,29 +/-1,70 |
| c16:1 | 0,18 | 0,085 | 5,48% | 2,51% | 3.37 +/- 0,37 |
| c17:0 | 0,00 | 0,000 | 0,00% | 0,00% | 0,00 +/- 0,01 |
| c17:1 | 0,00 | 0,000 | 0,00% | 0,00% | 0,00 +/- 0,01 |
| c18:0 | 394 | 0,099 | 48,36% | 1,21% | 8,14 +/- 0,67 |
| c18:1 | 0,74 | 4,941 | 1,64% | 11,01% | 44,87 +/-1,22 |
| c18:2 n6 | 0,09 | 3,422 | 0,60% | 22,51 % | 15,20 +/- 1,55 |
| c18:3 n3 | 0,01 | 0,025 | 2,25% | 6,32% | 0,40 +/-1,34 |
| c18:4 n3 | 0,00 | 0,000 | 0,00% | 0.00% | 0,00 +/- 0,01 |
| c20:1 n9 | 0,02 | 0,020 | 8,20% | 7,33% | 0,28 +/- 0,05 |
| c20:2 n6 | 0,00 | 0,000 | 0,00% | 0,00% | 0,00 +/- 0,01 |
| c20:4 n6 | 0,00 | 1,493 | 0,14% | 85,14% | 1,75 +/- 0,12 |
| c20:3 n3 | 0,00 | 0,000 | 0,00% | 0,00% | 0,00 +/-0,01 |
| c20:5 n3 | 0,00 | 0,002 | 0,00% | 8,56% | 0,03 +/-0,05 |
| c22:4 n6 | 0,00 | 0,101 | 0,00% | 56,70% | 0,18 +/- 0,01 |
| c22:5 n6 | 0,00 | 0,362 | 0,00% | 82,39% | 0,44 +/- 0,01 |
| c22:5 n3 | 0,00 | 0,048 | 0,00% | 48,36% | 0,10 +/- 0,04 |
| c22:6 n3 | 0,00 | 0,532 | 0,00% | 91,14% | 0,58 +/- 0,17 |
| **SOMME** | **11,26** | **11,290** | | | |
| | | | | | |
| SAFA | 10,22 | 0,26 | 31,12% | 0,78% | 32,82 +/- 1,20 |
| MUFA | 0,94 | 5,05 | 1,94% | 10,40% | 48,52 +/- 2,1 |
| PUFA | 0,10 | 5,99 | 0,55% | 32,05% | 18,68 +/- 1,7 |
| LC-PUFA | 0,00 | 2,54 | 0,08% | 82,35% | 3.08 +/- 0,1 |
| w6 | 0,09 | 5,38 | 0,54% | 30,61% | 17,57 +/- 1,10 |
| w3 | 0,01 | 0.61 | 0,80% | 54,92% | 1,11 +/-1,08 |
| P/S | 0,01 | 23,24 | | | 0,57 +/- 0,10 |
| w6:w3 | 10,63 | 8,85 | | | 15,87 +/- 0,06 |
| w6:w3 LCP | 0,00 | 3,36 | | | 3,33 +/- 0,01 |

**Tableaux 2a et 2b : Profil lipidique d'un jaune d'oeuf selon l'invention**

| 2a | TG | | | | TL |
|---|---|---|---|---|---|
| | sn-1/3 % tot FA | sn-2 % tot FA | sn-1/3 % rel FA | sn-2 % rel FA | % FA |
| c14:0 | 0,13 | 0,13 | 47,60% | 47,33% | 0,27 +/- 0,05 |
| c14:1 n5 | 0,00 | 0,00 | 0,00% | 0,00% | 0,00 +/- 0,01 |
| c15:0 | 0,00 | 0,00 | 0,00% | 0,00% | 0.00 +/- 0,01 |
| c16:0 | 10,34 | 4,06 | 50,92% | 20,00% | 20,32 +/-1,70 |
| c16:1 | 1,84 | 1,08 | 58,40% | 34,35% | 3,14 +/- 0,37 |
| c17:0 | 0,00 | 0,00 | 0,00% | 0,00% | 0,00 +/- 0,01 |
| c17:1 | 0,00 | 0,00 | 0,00% | 0,00% | 0,00 +/- 0,01 |
| c18:0 | 2,61 | 1,62 | 29,56% | 18,33% | 8,84 +/- 0.67 |
| c18:1 | 21,73 | 10,88 | 56,03% | 28,04% | 38,79 +/-1,22 |
| c18:2 n6 | 6,65 | 4,22 | 46,79% | 29,69% | 14,21 +/- 1,55 |
| c18:3 n3 | 7,84 | 3,34 | 67,43% | 28,77% | 11,62 +/-1,34 |
| c18:4 n3 | 000 | 0,00 | 0,00% | 0,00% | 0,00 +/- 0,01 |
| c20:1 n9 | 0,03 | 0,10 | 18,15% | 72,18% | 0,14 +/- 0,05 |
| c20:2 n6 | 0,00 | 0,00 | 0,00% | 0,00% | 0,00 +/- 0,01 |
| c20:4 n6 | 0,18 | 0,08 | 23,68% | 10,09% | 0,76 +/- 0,12 |
| c20:3 n3 | 0,00 | 0,00 | 0,00% | 0,00% | 0.00 +/-0,01 |
| c20:5 n3 | 0,00 | 0,08 | 0,00% | 45,77% | 0,17 +/-0,05 |
| c22:4 n6 | 0,00 | 0,03 | 0,00% | 61,22% | 0,04 +/- 0,01 |
| c22:5 n6 | 0,03 | 0,00 | 61,35% | 0,00% | 0,04 +/- 0,01 |
| c22:5 n3 | 0,16 | 0,05 | 42,87% | 14,21% | 0,36 +/- 0,04 |
| c22:6 n3 | 0,10 | 0.03 | 8,86% | 2,20% | 1,17 +/-0,17 |
| **SOMME** | **51,63** | **25,69** | | | |
| | | | | | |
| SAFA | 13.09 | 5,81 | 44,47% | 19,75% | 29,43 +/-1,20 |
| MUFA | 23,60 | 12,06 | 56,08% | 28,66% | 42,08 +/- 2,1 |
| PUFA | 14,95 | 7,82 | 52,68% | 27,55% | 28,37 +/-1,7 |
| LC-PUFA | 0,47 | 0,26 | 18,28% | 10,10% | 2,55 +/- 0,1 |
| w6 | 6,85 | 4,32 | 45,52% | 28,70% | 15,05 +/-1,10 |
| w3 | 8,09 | 3,50 | 60,78% | 26,26% | 13,32 +/- 1,08 |
| P/S | 1,14 | 1,35 | | | 096 +/-0,10 |
| w6:w3 | 0,85 | 1,24 | | | 1,13 +/-0,06 |
| w6:w3 LCP | 0,80 | 0,67 | | | 0,50 +/- 0,01 |

| 2b | PL | | | | TL |
|---|---|---|---|---|---|
| | sn-1 % tot FA | sn-2 % tot FA | sn-1 % rel FA | sn-2 % rel FA | % FA |
| c14:0 | 0,00 | 0,014 | 0,00% | 5,08% | 0,27 +/- 0,05 |
| c14:1 N5 | 0,00 | 0,000 | 0,00% | 0,00% | 0,00 +/- 0,01 |
| c15:0 | 0,00 | 0,000 | 0,00% | 0,00% | 0,00 +/- 0,01 |
| c16:0 | 5,77 | 0,139 | 28,40% | 0,68% | 20,32 +/-1,70 |
| c16:1 | 0,15 | 0,074 | 4,90% | 2,35% | 3,14 +/-0,37 |
| c17:0 | 0,00 | 0,000 | 0,00% | 0,00% | 0,00 +/- 0,01 |
| c17:1 | 0,00 | 0,000 | 0,00% | 0,00% | 0,00 +/- 0,01 |
| c18:0 | 4,45 | 0,154 | 50,37% | 1,74% | 8,84 +/- 0,67 |
| c18:1 | 0,68 | 5,496 | 1,76% | 14,17% | 38,79 +/-1,22 |
| c18:2 N6 | 0,13 | 3,216 | 0,89% | 22,64% | 14,21 +/-1.55 |
| c18:3 N3 | 0,04 | 0,403 | 0,33% | 3,46% | 11,62 +/-1,34 |
| c18:4 N3 | 0,00 | 0,000 | 0,00% | 0,00% | 0,00 +/- 0,01 |
| c20:1 N9 | 0,00 | 0,011 | 1,75% | 7.92% | 0,14 +/- 0,05 |
| c20:2 N6 | 0,00 | 0,000 | 0,00% | 0,00% | 0,00 +/- 0,01 |
| c20:4 N6 | 0,01 | 0,492 | 1,80% | 64.42% | 0,76 +/-0,12 |
| c20:3 N3 | 0,00 | 0.000 | 0.00% | 0,00% | 0,00 +/-0,01 |
| c20:5 N3 | 0,00 | 0,091 | 0,00% | 54,23% | 0,17 +/-0,05 |
| c22:4 N6 | 000 | 0,016 | 0,00% | 38,78% | 0,04 +/- 0,01 |
| c22:5 N6 | 0,00 | 0,016 | 0,00% | 38,65% | 0,04 +/- 0,01 |
| c22:5 N3 | 0,00 | 0,155 | 0,00% | 42,92% | 0,36 +/- 0,04 |
| c22:6 N3 | 0,02 | 1,016 | 1,93% | 87,01% | 1,17 +/-0,17 |
| **SOMME** | **11,26** | **11,294** | | | |
| | | | | | |
| SAFA | 10,22 | 0,31 | 34,74% | 1,04% | 29,43 +/-1,20 |
| MUFA | 0,84 | 5,58 | 2,00% | 13,26% | 42,08 +/-2,1 |
| PUFA | 0,20 | 5,41 | 0.71% | 19,05% | 28,37 +/-1,7 |
| LC-PUFA | 0,04 | 1,79 | 1,43% | 70,20% | 2,55 +/-0,1 |
| w6 | 0,14 | 3,74 | 0,93% | 24,85% | 15,05 +/-1,10 |
| w3 | 0,06 | 1,67 | 0.46% | 12,50% | 13,32 +/-1,08 |
| P/S | 0,02 | 17,62 | | | 0,96 +/-0,10 |
| w6:w3 | 2,29 | 2,25 | | | 1,13 +/-0,06 |
| w6:w3 LCP | 0,61 | 0,42 | | | 0,50 +/- 0,01 |

L'oeuf selon l'invention comprend une fraction en acides gras ω3 en position sn-2 de la fraction triglycéride correspondant à ∼4% en poids par rapport au poids total en acides gras, et ce, tout en conservant une fraction lipidique équilibrée en acides gras ω6 et ω3 de types plantes à graines et plantes vertes (ω6 : ω3) selon un rapport acides gras ω6 de type plantes à graines / acide gras ω3 de type plante verte = 1 :1 ± 10%, ainsi qu'une fraction lipidique équilibrée entre les acides gras polyinsaturés et les acides gras saturés (P/S) selon un rapport acides gras polyinsaturés / acides gras saturés = 1 :1 ± 10%, confirmant ainsi l'activité hypocholestérolaémique de cet oeuf, ce qui est tout à fait remarquable.

L'oeuf standard, c'est-à-dire qui n'est pas issu du cheptel nourri selon l'invention, présente quant à lui des rapports ω6 : ω3 et P/S déséquilibrés (∼16 et 0,60) conjointement à une fraction en acides gras ω3 en position sn-2 de la fraction triglycéride de seulement 0,21 % en poids par rapport au poids total en acides gras.

Il est bien entendu que la présente invention n'est en aucune façon limitée aux formes de réalisations décrites ci-dessus et que bien des modifications peuvent y être apportées sans sortir du cadre des revendications annexées.

### Liste des abréviations

LC-PUFA : acide gras polyinsaturé à longue chaîne
LCP : acide gras polyinsaturé à longue chaîne
MUFA : acide gras monoinsaturé
P : acide gras polyinsaturé
PL : phospholipide
PUFA : acide gras polyinsaturé
S : acide gras saturé
SAFA : acide gras saturé
TG : triglycéride
ω6 : ω3 LCP : rapport entre les acides gras polyinsaturé à longue chaîne ω6 et ω3
% tot FA : % en poids par rapport au poids total en acides gras
rel % FA : % en poids par rapport au poids total de l'acide gras considéré

## Revendications

1. Oeuf, présentant un effet hypocholestérolaémique amélioré, provenant d'un oiseau domestiqué, en particulier d'une pondeuse, présentant :
i) une fraction lipidique équilibrée en acides gras ω6 et ω3 de types plantes à graines et plantes vertes selon un rapport acides gras ω6 de type plantes à graines / acide gras ω3 de type plante verte = 1 :1 ± 10% ; et
ii) une fraction lipidique équilibrée entre les acides gras polyinsaturés et les acides gras saturés selon un rapport acides gras polyinsaturés / acides gras saturés = 1 :1 ± 10%,
**caractérisé en ce qu'**il présente en outre des acides gras ω6 et ω3 en position sn-2 d'une fraction triglycéride équilibrée selon un rapport acides gras ω6 / acide gras ω3 compris entre 1 : 1 ± 10% et 1 : 1,2 ± 10%.

2. Oeuf selon la revendication 1, présentant une fraction phospholipidique est équilibrée selon le rapport acides gras ω6 dérivés d'animaux / acides gras ω3 dérivés d'animaux = 1 :3 ± 10%.

3. Oeuf selon la revendication 1 ou 2, équilibré en acides gras ω3 de type plantes vertes et dérivés d'animaux selon un rapport acides gras ω3 de type plantes vertes / acides gras ω3 d'animaux = 5 :1 + 10%.

4. Oeuf selon l'une quelconque de revendications précédentes, comprenant des acides gras ω3 de type plantes vertes en concentration comprise entre 450 et 600 mg/oeuf.

5. Oeuf selon l'une quelconque des revendications précédentes, dont les acides gras ω3 dérivés d'animaux constituent plus de 90 mg/oeuf et dont la composition comprend des acides gras ω3 en C20 et C22, les acides gras en C20 et en C22 étant de préférence choisis dans le groupe constitué de l'acide eicosapentaénoïque, de l'acide docosapenténoïque et de l'acide docosa-hexaénoïque.

6. Oeuf selon l'une quelconque des revendications précédentes, qui ne contient pas plus de 400 mg/oeuf d'acides gras ω6 dérivés d'animaux et qui est essentiellement l'acide arachidonique.

7. Oeuf selon l'une quelconque des revendications précédentes, qui ne contient pas plus de 2,5 g d'acides gras saturés et 375 mg de cholestérol par % en poids de partie comestible.

8. Composition alimentaire comprenant, comme ingrédient alimentaire, l'ensemble de l'oeuf ou le jaune de l'oeuf selon l'une quelconque des revendications 1 à 7, en particulier une composition alimentaire convenant à la consommation humaine.
